# EUROPÄISCHE PATENTSCHRIFT

(11) **EP 3 244 068 B1**
(45) Veröffentlichungstag und Bekanntmachung des Hinweises auf die Patenterteilung: **01.01.2020**
(21) Anmeldenummer: 16168948.4
(22) Anmeldetag: 10.05.2016
(51) Int. Cl.: F04D 19/04, F04D 25/06

(54) **VAKUUMPUMPE**
VACUUM PUMP
POMPE À VIDE

(43) Veröffentlichungstag der Anmeldung: 15.11.2017
(73) Patentinhaber: PFEIFFER VACUUM GMBH, 35614 Asslar (DE)
(72) Erfinder: Bergmann, Gabriel, 35039 Marburg (DE)
(74) Vertreter: Manitz Finsterwald Patent- und Rechtsanwaltspartnerschaft mbB

(56) Entgegenhaltungen:
- EP-A1- 2 073 352
- EP-A1- 2 866 343
- EP-A1- 2 995 820
- WO-A1-2006/029967
- WO-A2-02/07289
- DE-A1- 19 633 209
- DE-A1-102011 018 842
- DE-U- 7 121 095
- US-A- 2 898 535

## Beschreibung

Die vorliegende Erfindung betrifft eine Vakuumpumpe, insbesondere Turbomolekularpumpe, mit einem Elektromotor zum Antreiben eines sich bewegenden Teils der Vakuumpumpe, insbesondere zum Antreiben eines Pump-Rotors der Vakuumpumpe, wobei der Elektromotor einen Rotor und einen Stator aufweist, wobei der Stator drei von einem jeweiligen elektrischen Leiter gebildete Wicklungsstränge zur Erzeugung eines statorseitigen magnetischen Feldes aufweist, das mit einem rotorseitigen magnetischen Feld des Rotors zum rotierenden Antreiben des Rotors zusammenwirkt.

Ein Niederspannungsnetz, wie es etwa in Deutschland zu finden ist, kann als ein Drehstrom-Vierleitersystem mit drei Außenleitern und einem sogenannten Sternpunktleiter ausgestaltet sein, bei dem die Außenleiterspannung, also die Spannung zwischen zwei Außenleitern, ca. 400 Volt beträgt, während die Spannung zwischen einem Außenleiter und dem Sternpunktleiter ca. 230 Volt beträgt. Ein derartiges Spannungsnetz wird nachfolgend auch als 400 Volt-Netz bezeichnet. Es sind auch Niederspannungsnetze bekannt, die als ein Einphasen-Dreileitersystem mit zwei Außenleitern und einem Mittelleiter ausgestaltet sind. Dabei beträgt die Spannung zwischen den beiden Außenleitern ca. 200 Volt oder ca. 240 Volt und zwischen einem Außenleiter und dem Mittelleiter ca. 100 Volt oder ca. 120 Volt. Ein derartiges Spannungsnetz wird nachfolgend auch als 200 Volt-Netz bezeichnet. Ein derartiges 200 Volt-Netz ist beispielweise als öffentliches Niederspannungsnetz in Japan (100V/200V) oder in den USA (120V/240V) zu finden.

Bei Vakuumpumpen ist es gebräuchlich, einen jeweiligen, für ein Niederspannungsnetz ausgelegten Elektromotortyp in der Vakuumpumpe zu verbauen. Es werden also bei der Herstellung von Vakuumpumpen wenigstens zwei unterschiedliche Elektromotortypen benötigt. Zum Beispiel wird ein Elektromotortyp zur Verwendung in einem 400 Volt-Netz und ein anderer Elektromotortyp wird zur Verwendung in einem 200 Volt-Netz eingesetzt. Dabei unterscheiden sich die beiden Motortypen insbesondere in der Verschaltung ihrer statorseitigen Wicklungsstränge. Je nach Land, in das eine Vakuumpumpe verkauft werden soll, wird entweder ein Elektromotor des einen oder des anderen Motortyps in der Vakuumpumpe verbaut. Dies verkompliziert und verteuert die Herstellungskosten.

EP 2 866 343 A1 offenbart eine Vakuumpumpe nach dem Oberbegriff des Anspruchs 1.

Der vorliegenden Erfindung liegt daher die Aufgabe zugrunde, eine Vakuumpumpe bereitzustellen, deren Herstellung mit geringerem Aufwand und somit kostengünstiger erfolgen kann.

Die Aufgabe wird durch eine Vakuumpumpe mit den Merkmalen des Anspruchs 1 gelöst und insbesondere dadurch, dass eine Vakuumpumpe der eingangs genannten Art dadurch weitergebildet ist, dass ein elektrischer Anschluss mit wenigstens 6 von außerhalb der Vakuumpumpe zugänglichen und in das Innere der Vakuumpumpe führenden elektrischen Kontakten vorgesehen ist, und dass jedes der beiden Enden jedes Wicklungsstrangs mit einem der elektrischen Kontakte verbunden ist.

Bei der erfindungsgemäßen Vakuumpumpe sind somit alle sechs Enden der 3 Wicklungsstränge mittels der elektrischen Kontakte nach außen geführt. Dadurch können alle Enden der Wicklungsstränge von außerhalb der Vakuumpumpe in einer gewünschten Art und Weise miteinander verbunden bzw. verschaltet werden. Die Enden der Wicklungsstränge können dabei so verschaltet werden, dass sich der Elektromotor in Verbindung mit einem 400 Volt-Netz oder einem 200-Volt-Netz einsetzen lässt. Bei der Herstellung der Vakuumpumpe muss somit nicht ein Elektromotor eines für ein bestimmtes Netz ausgelegten Elektromotortyps eingebaut werden. Vielmehr kann immer ein Elektromotor des gleichen Typs eingebaut werden, der je nach Verschaltung der elektrischen Kontakte in einem 200 Volt-Netz oder 400 Volt-Netz eingesetzt werden kann. Dadurch kann die Herstellung der Vakuumpumpe vereinfacht und kostengünstiger realisiert werden. Außerdem lässt sich der Serviceaufwand für die Vakuumpumpe verringern, da nur auf einen Motorentyp abgestellt zu werden braucht.

Besonders vorteilhaft ist es, wenn der elektrische Anschluss von einer, insbesondere am Gehäuse der Vakuumpumpe vorgesehenen, Vakuumstromdurchführung gebildet wird, und die wenigstens 6 elektrischen Kontakte vom Inneren der Vakuumpumpe durch die Vakuumstromdurchführung hindurch nach außen geführt sind. Alle Enden der Wicklungsstränge lassen sich somit von außerhalb der Vakuumpumpe erreichen, während das Innere der Vakuumpumpe aufgrund der Verwendung der Vakuumstromdurchführung gegen Atmosphäre abgedichtet wird.

Die elektrischen Kontakte sind derart verschaltet oder verschaltbar, dass die drei Wicklungsstränge die Konfiguration bzw. Topologie einer Sternschaltung oder einer Dreieckschaltung aufweisen. Die elektrischen Kontakte lassen sich daher von außerhalb der Vakuumpumpe derart verschalten, dass die Wicklungsstränge eine Sternschaltung oder eine Dreieckschaltung bilden. Sternschaltungen und Dreieckschaltungen sind im Zusammenhang mit den statorseitigen Wicklungssträngen eines Elektromotors grundsätzlich bekannt.

Es kann insbesondere vorgesehen sein, dass die Vakuumpumpe mit in Art einer Sternschaltung verschalteten Wicklungssträngen in Verbindung mit einem 400 Volt-Netz eingesetzt wird, während die Vakuumpumpe mit in Dreieck verschalteten Wicklungssträngen in Verbindung mit einem 200-Volt-Netz eingesetzt wird. Die Vakuumpumpe lässt sich somit mit dem gleichen Motor allein durch entsprechende Verschaltung der elektrischen Kontakte wahlweise in Kombination mit einem 200 Volt-Netz oder einem 400 Volt-Netz betreiben.

Vorzugsweise ist ein erster Stecker an dem elektrischen Anschluss anbringbar oder angebracht, mittels dem elektrische Kontakte des Anschlusses derart miteinander kurzgeschlossen werden, dass die drei Wicklungsstränge in Art einer Sternschaltung miteinander verbunden sind. Durch Anbringen des ersten Steckers am Anschluss können somit die statorseitigen Wicklungsstränge in Art einer Sternschaltung miteinander verschaltet werden.

Es kann ein zweiter Stecker an dem elektrischen Anschluss anbringbar oder angebracht sein, durch den elektrische Kontakte des Anschlusses derart miteinander kurzgeschlossen werden, dass die drei Wicklungsstränge in Art einer Dreieckschaltung miteinander verbunden sind. Durch Anbringen des ersten Steckers am Anschluss können somit die statorseitigen Wicklungsstränge in Art einer Dreieckschaltung miteinander verschaltet werden.

Es kann auch eine Umschalteinrichtung an dem elektrischen Anschluss anbringbar oder angebracht sein, mittels der die elektrischen Kontakte wechselweise, also umschaltbar, in Art einer Sternschaltung oder in Art einer Dreieckschaltung miteinander kurzgeschlossen werden können. Es kann somit bzgl. der Bestromung der Wicklungsstränge zwischen einer Sterntopologie und einer Dreiecktopologie umgeschaltet werden. Der Elektromotor kann daher, zum Beispiel in Abhängigkeit von der Drehzahl des Rotors, mit in Art einer Sternschaltung oder in Art einer Dreieckschaltung verschalteten Wicklungssträngen betrieben werden.

Erfindungsgemäß weisen die Wicklungsstränge des Stators eine Sehnung derart auf, dass Oberwellen des statorseitigen magnetischen Felds, insbesondere Oberwellen mit durch drei teilbaren Ordnungszahlen, zumindest im Wesentlichen vermieden werden. Die Wicklungsstränge können daher gesehnt sein, um insbesondere die Oberwellen mit durch drei teilbaren Ordnungszahlen, insbesondere der Ordnungszahlen 3, 9 und 15, zu reduzieren oder bevorzugt zumindest im Wesentlichen zu vermeiden.

Die Oberwellen können insbesondere dann als zum Verschwinden gebracht bzw. als vermieden betrachtet werden, wenn deren Amplitude unterhalb eines vorgegebenen Schwellenwerts liegt. Der Schwellenwert kann so gewählt sein, dass sich die Oberwellen nicht mehr störend auf den Motorbetrieb auswirken. Der Schwellenwert kann zum Beispiel 10% oder 5% oder 1% oder 0,5% der Amplitude der Grundschwingung betragen.

Die Sehnung S kann als das Verhältnis von Spulenweite Y zu Polteilung T definiert werden. Die Polteilung T kann als Quotient aus der Nutzahl Z des Stators und der doppelten Polpaarzahl p berechnet werden, T = Z / (2p).

Dabei ergibt sich die Nutzahl Z aus Z = 2pmq, wobei m die Strangzahl ist, also hier m = 3, und wobei q die sogenannte Lochzahl ist, welche die Anzahl der statorseitigen Nuten pro Pol und Wicklungsstrang angibt.

Die Spulenweite Y entspricht der Breite einer jeweiligen von den Wicklungssträngen gebildeten Spule, die der Anzahl der Nuten entspricht, über die sich die Spule erstreckt. Die Spulenweite Y ist bei einer gesehnten Wicklung kleiner als die Polteilung, so dass die Sehnung kleiner als 1 ist (S < 1).

Vorzugsweise beträgt die Sehnung 2/3 oder 4/6 oder 6/9 oder allgemein 2n/3n, wobei n eine positive ganze Zahl ist. Bei einer derartigen Sehnung können insbesondere die Amplituden der Oberwellen des statorseitig erzeugten Magnetfelds, insbesondere mit durch drei teilbaren Ordnungszahlen, bevorzugt mit den Ordnungszahlen 3, 9, 15, usw., derart gering gehalten werden, dass sie praktisch nicht vorhanden sind oder sich zumindest nicht negativ auf den Motorbetrieb auswirken.

Die Wicklungsstränge können in Art einer an sich bekannten Zweischichtwicklung am Stator angeordnet sein.

Erfindungsgemäß ist der Elektromotor ein Synchronmotor. Der Synchronmotor kann mit in Art einer Dreieckschaltung oder in Art einer Sternschaltung verschalteten Wicklungssträngen betrieben werden.

Der Rotor des Elektromotors kann zur Erzeugung des rotorseitigen Magnetfelds mehrere in Umfangsrichtung des Rotors versetzt angeordnete Permanentmagnete aufweisen. Bei dem Elektromotor kann es sich insbesondere um einen PM-Synchronmotor handeln, wobei PM für die rotorseitigen Permanentmagnete steht. Die Permanentmagnete können am Außenumfang des Rotors angeordnet oder in den Rotor eingebettet sein. Eingebettete bzw. vergrabene Permanentmagnete bieten den Vorteil, dass bei rotierendem Rotor auf die Permanentmagnete wirkende Fliehkräfte vom Rotor aufgefangen werden. Außerdem kann bei vergrabenen Permanentmagneten der Luftspalt zwischen dem Rotor und dem Stator gering gehalten werden.

Nach einer bevorzugten Ausgestaltung der Erfindung ist der Elektromotor ein PM-Synchronmotor mit rotorseitig vergrabenen Magneten, bei dem die statorseitigen Wicklungsstränge eine Sehnung von 2/3 oder 4/6 oder 6/9 oder allgemein 2n/3n (n = 1, 2, 3, usw.) aufweisen und in Art einer Dreieckschaltung oder in Art einer Sternschaltung verschaltet sind. Durch die gewählte Sehnung lassen sich Magnetfeldoberwellen mit durch drei teilbaren Ordnungszahlen, insbesondere der Ordnungszahlen 3, 9, 15 vermeiden bzw. auf ein nicht störendes Maß reduzieren. Demgegenüber treten bei herkömmlichen Elektromotoren mit rotorseitig vergrabenen Magneten und in einer Dreieckschaltung verschalteten Wicklungssträngen große Kreisströme im Dreieck auf, die hohe Motorverluste und Drehmomentrippel bewirken können.

Bei der Vakuumpumpe kann es sich nicht nur um eine Turbomolekularpumpe handeln, sondern prinzipiell um jede Vakuumpumpe, bei der ein Elektromotor als Antrieb für ein sich bewegendes Teil der Vakuumpumpe zum Einsatz kommt. Bei der Vakuumpumpe kann es sich beispielsweise um eine Scroll-, Schraubenvakuum-, Membran-, Drehschieber-, Hubkolben- oder Wälzkolbenpumpe handeln. Nachfolgend wird die Erfindung beispielhaft anhand vorteilhafter Ausführungsformen unter Bezugnahme auf die beigefügten Figuren beschrieben. Es zeigen, jeweils schematisch,
- Fig. 1: eine perspektivische Ansicht einer Turbomolekularpumpe,
- Fig. 2: eine Ansicht der Unterseite der Turbomolekularpumpe von Fig. 1,
- Fig. 3: einen Querschnitt der Turbomolekularpumpe längs der in Fig. 2 gezeigten Schnittlinie A-A,
- Fig. 4: eine Querschnittsansicht der Turbomolekularpumpe längs der in Fig. 2 gezeigten Schnittlinie B-B,
- Fig. 5: eine Querschnittsansicht der Turbomolekularpumpe längs der in Fig. 2 gezeigten Schnittlinie C-C,
- Fig. 6: ein Schaltbild eines Stators eines Elektromotors in einer Sternkonfiguration,
- Fig. 7: ein Schaltbild eines Stators eines Elektromotors in einer Dreieckkonfiguration,
- Fig. 8: eine Vakuumstromdurchführung im Querschnitt und
- Fig. 9: ein Beispiel für gesehnte Wicklungsstränge.

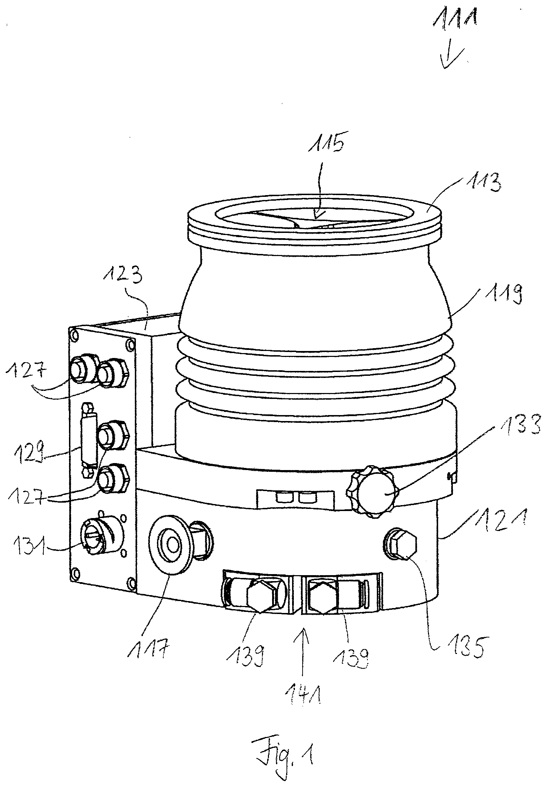

Die in Fig. 1 gezeigte Turbomolekularpumpe 111 umfasst einen von einem Einlassflansch 113 umgebenen Pumpeneinlass 115, an welchen in an sich bekannter Weise ein nicht dargestellter Rezipient angeschlossen werden kann. Das Gas aus dem Rezipienten kann über den Pumpeneinlass 115 aus dem Rezipienten gesaugt und durch die Pumpe hindurch zu einem Pumpenauslass 117 gefördert werden, an den eine Vorvakuumpumpe, wie etwa eine Drehschieberpumpe, angeschlossen sein kann.

Der Einlassflansch 113 bildet bei der Ausrichtung der Vakuumpumpe gemäß Fig. 1 das obere Ende des Gehäuses 119 der Vakuumpumpe 111. Das Gehäuse 119 umfasst ein Unterteil 121, an welchem seitlich ein Elektronikgehäuse 123 angeordnet ist. In dem Elektronikgehäuse 123 sind elektrische und/oder elektronische Komponenten der Vakuumpumpe 111 untergebracht, z.B. zum Betreiben eines in der Vakuumpumpe angeordneten Elektromotors 125. Am Elektronikgehäuse 123 sind mehrere Anschlüsse 127 für Zubehör vorgesehen. Außerdem sind eine Datenschnittstelle 129, z.B. gemäß dem RS485-Standard, und ein Stromversorgungsanschluss 131 am Elektronikgehäuse 123 angeordnet.

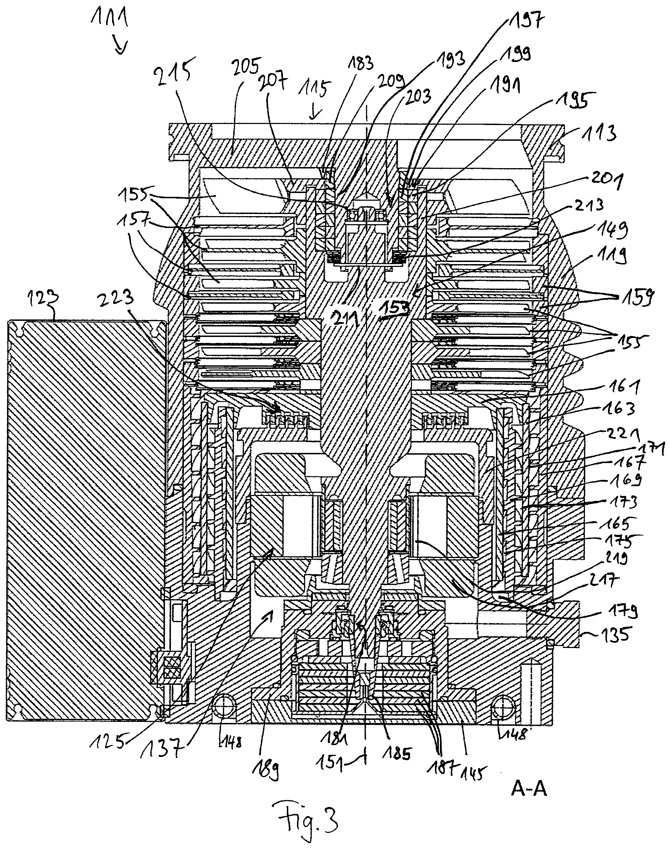

Am Gehäuse 119 der Turbomolekularpumpe 111 ist ein Fluteinlass 133, insbesondere in Form eines Flutventils, vorgesehen, über den die Vakuumpumpe 111 geflutet werden kann. Im Bereich des Unterteils 121 ist ferner noch ein Sperrgasanschluss 135, der auch als Spülgasanschluss bezeichnet wird, angeordnet, über welchen Spülgas zum Schutz des Elektromotors 125 (siehe z.B. Fig. 3) vor dem von der Pumpe geförderten Gas in den Motorraum 137, in welchem der Elektromotor 125 in der Vakuumpumpe 111 untergebracht ist, gebracht werden kann. Im Unterteil 121 sind ferner noch zwei Kühlmittelanschlüsse 139 angeordnet, wobei einer der Kühlmittelanschlüsse als Einlass und der andere Kühlmittelanschluss als Auslass für Kühlmittel vorgesehen ist, das zu Kühlzwecken in die Vakuumpumpe geleitet werden kann.

Die untere Seite 141 der Vakuumpumpe kann als Standfläche dienen, sodass die Vakuumpumpe 111 auf der Unterseite 141 stehend betrieben werden kann. Die Vakuumpumpe 111 kann aber auch über den Einlassflansch 113 an einem Rezipienten befestigt werden und somit gewissermaßen hängend betrieben werden. Außerdem kann die Vakuumpumpe 111 so gestaltet sein, dass sie auch in Betrieb genommen werden kann, wenn sie auf andere Weise ausgerichtet ist als in Fig. 1 gezeigt ist. Es lassen sich auch Ausführungsformen der Vakuumpumpe realisieren, bei der die Unterseite 141 nicht nach unten, sondern zur Seite gewandt oder nach oben gerichtet angeordnet werden kann.

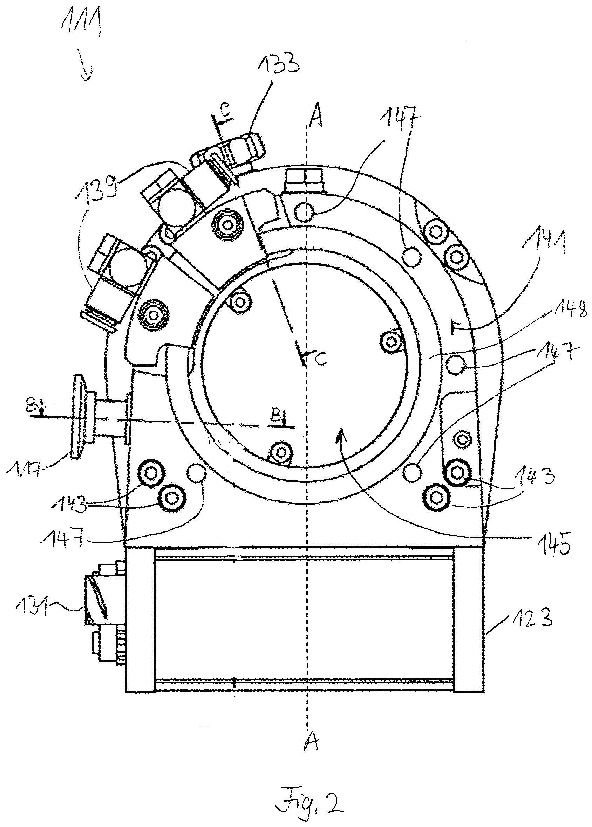

An der Unterseite 141, die in Fig. 2 dargestellt ist, sind noch diverse Schrauben 143 angeordnet, mittels denen hier nicht weiter spezifizierte Bauteile der Vakuumpumpe aneinander befestigt sind. Beispielsweise ist ein Lagerdeckel 145 an der Unterseite 141 befestigt.

An der Unterseite 141 sind außerdem Befestigungsbohrungen 147 angeordnet, über welche die Pumpe 111 beispielsweise an einer Auflagefläche befestigt werden kann.

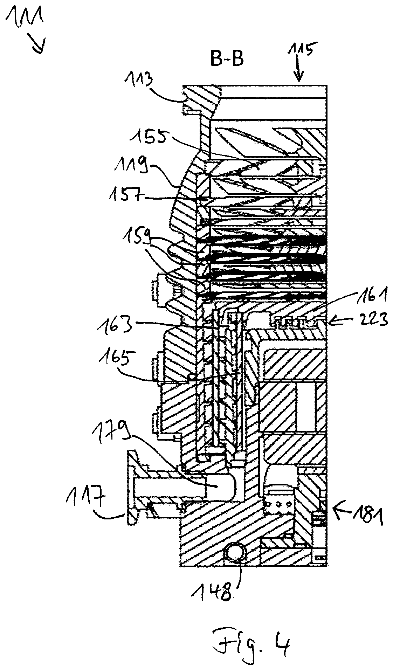

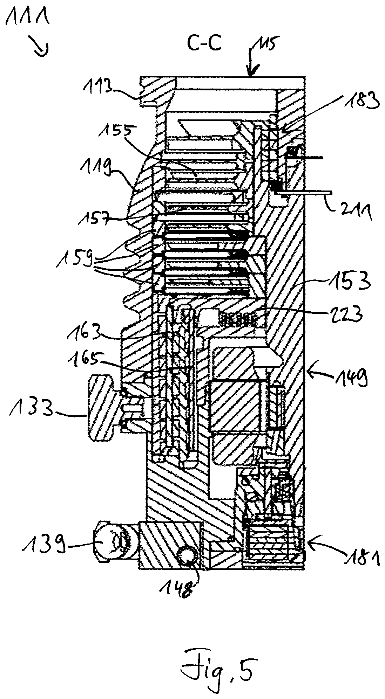

In den Figuren 2 bis 5 ist eine Kühlmittelleitung 148 dargestellt, in welcher das über die Kühlmittelanschlüsse 139 ein- und ausgeleitete Kühlmittel zirkulieren kann.

Wie die Schnittdarstellungen der Figuren 3 bis 5 zeigen, umfasst die Vakuumpumpe mehrere Prozessgaspumpstufen zur Förderung des an dem Pumpeneinlass 115 anstehenden Prozessgases zu dem Pumpenauslass 117.

In dem Gehäuse 119 ist ein Rotor 149 angeordnet, der eine um eine Rotationsachse 151 drehbare Rotorwelle 153 aufweist.

Die Turbomolekularpumpe 111 umfasst mehrere pumpwirksam miteinander in Serie geschaltete turbomolekulare Pumpstufen mit mehreren an der Rotorwelle 153 befestigten radialen Rotorscheiben 155 und zwischen den Rotorscheiben 155 angeordneten und in dem Gehäuse 119 festgelegten Statorscheiben 157. Dabei bilden eine Rotorscheibe 155 und eine benachbarte Statorscheibe 157 jeweils eine turbomolekulare Pumpstufe. Die Statorscheiben 157 sind durch Abstandsringe 159 in einem gewünschten axialen Abstand zueinander gehalten.

Die Vakuumpumpe umfasst außerdem in radialer Richtung ineinander angeordnete und pumpwirksam miteinander in Serie geschaltete Holweck-Pumpstufen. Der Rotor der Holweck-Pumpstufen umfasst eine an der Rotorwelle 153 angeordnete Rotornabe 161 und zwei an der Rotornabe 161 befestigte und von dieser getragene zylindermantelförmige Holweck-Rotorhülsen 163, 165, die koaxial zur Rotationsachse 151 orientiert und in radialer Richtung ineinander geschachtelt sind. Ferner sind zwei zylindermantelförmige Holweck-Statorhülsen 167, 169 vorgesehen, die ebenfalls koaxial zu der Rotationsachse 151 orientiert und in radialer Richtung gesehen ineinander geschachtelt sind.

Die pumpaktiven Oberflächen der Holweck-Pumpstufen sind durch die Mantelflächen, also durch die radialen Innen- und/oder Außenflächen, der Holweck-Rotorhülsen 163, 165 und der Holweck-Statorhülsen 167, 169 gebildet. Die radiale Innenfläche der äußeren Holweck-Statorhülse 167 liegt der radialen Außenfläche der äußeren Holweck-Rotorhülse 163 unter Ausbildung eines radialen Holweck-Spalts 171 gegenüber und bildet mit dieser die der Turbomolekularpumpen nachfolgende erste Holweck-Pumpstufe. Die radiale Innenfläche der äußeren Holweck-Rotorhülse 163 steht der radialen Außenfläche der inneren Holweck-Statorhülse 169 unter Ausbildung eines radialen Holweck-Spalts 173 gegenüber und bildet mit dieser eine zweite Holweck-Pumpstufe. Die radiale Innenfläche der inneren Holweck-Statorhülse 169 liegt der radialen Außenfläche der inneren Holweck-Rotorhülse 165 unter Ausbildung eines radialen Holweck-Spalts 175 gegenüber und bildet mit dieser die dritte Holweck-Pumpstufe.

Am unteren Ende der Holweck-Rotorhülse 163 kann ein radial verlaufender Kanal vorgesehen sein, über den der radial außenliegende Holweck-Spalt 171 mit dem mittleren Holweck-Spalt 173 verbunden ist. Außerdem kann am oberen Ende der inneren Holweck-Statorhülse 169 ein radial verlaufender Kanal vorgesehen sein, über den der mittlere Holweck-Spalt 173 mit dem radial innenliegenden Holweck-Spalt 175 verbunden ist. Dadurch werden die ineinander geschachtelten Holweck-Pumpstufen in Serie miteinander geschaltet. Am unteren Ende der radial innenliegenden Holweck-Rotorhülse 165 kann ferner ein Verbindungskanal 179 zum Auslass 117 vorgesehen sein.

Die vorstehend genannten pumpaktiven Oberflächen der Holweck-Statorhülsen 163, 165 weisen jeweils mehrere spiralförmig um die Rotationsachse 151 herum in axialer Richtung verlaufende Holweck-Nuten auf, während die gegenüberliegenden Mantelflächen der Holweck-Rotorhülsen 163, 165 glatt ausgebildet sind und das Gas zum Betrieb der Vakuumpumpe 111 in den Holweck-Nuten vorantreiben.

Zur drehbaren Lagerung der Rotorwelle 153 sind ein Wälzlager 181 im Bereich des Pumpenauslasses 117 und ein Permanentmagnetlager 183 im Bereich des Pumpeneinlasses 115 vorgesehen.

Im Bereich des Wälzlagers 181 ist an der Rotorwelle 153 eine konische Spritzmutter 185 mit einem zu dem Wälzlager 181 hin zunehmenden Außendurchmesser vorgesehen. Die Spritzmutter 185 steht mit mindestens einem Abstreifer eines Betriebsmittelspeichers in gleitendem Kontakt. Der Betriebsmittelspeicher umfasst mehrere aufeinander gestapelte saugfähige Scheiben 187, die mit einem Betriebsmittel für das Wälzlager 181, z.B. mit einem Schmiermittel, getränkt sind.

Im Betrieb der Vakuumpumpe 111 wird das Betriebsmittel durch kapillare Wirkung von dem Betriebsmittelspeicher über den Abstreifer auf die rotierende Spritzmutter 185 übertragen und in Folge der Zentrifugalkraft entlang der Spritzmutter 185 in Richtung des größer werdenden Außendurchmessers der Spritzmutter 185 zu dem Wälzlager 181 hin gefördert, wo es z.B. eine schmierende Funktion erfüllt. Das Wälzlager 181 und der Betriebsmittelspeicher sind durch einen wannenförmigen Einsatz 189 und den Lagerdeckel 145 in der Vakuumpumpe eingefasst.

Das Permanentmagnetlager 183 umfasst eine rotorseitige Lagerhälfte 191 und eine statorseitige Lagerhälfte 193, welche jeweils einen Ringstapel aus mehreren in axialer Richtung aufeinander gestapelten permanentmagnetischen Ringen 195, 197 umfassen. Die Ringmagnete 195, 197 liegen einander unter Ausbildung eines radialen Lagerspalts 199 gegenüber, wobei die rotorseitigen Ringmagnete 195 radial außen und die statorseitigen Ringmagnete 197 radial innen angeordnet sind. Das in dem Lagerspalt 199 vorhandene magnetische Feld ruft magnetische Abstoßungskräfte zwischen den Ringmagneten 195, 197 hervor, welche eine radiale Lagerung der Rotorwelle 153 bewirken. Die rotorseitigen Ringmagnete 195 sind von einem Trägerabschnitt 201 der Rotorwelle 153 getragen, welcher die Ringmagnete 195 radial außenseitig umgibt. Die statorseitigen Ringmagnete 197 sind von einem statorseitigen Trägerabschnitt 203 getragen, welcher sich durch die Ringmagnete 197 hindurch erstreckt und an radialen Streben 205 des Gehäuses 119 aufgehängt ist. Parallel zu der Rotationsachse 151 sind die rotorseitigen Ringmagnete 195 durch ein mit dem Trägerabschnitt 203 gekoppeltes Deckelelement 207 festgelegt. Die statorseitigen Ringmagnete 197 sind parallel zu der Rotationsachse 151 in der einen Richtung durch einen mit dem Trägerabschnitt 203 verbundenen Befestigungsring 209 sowie einen mit dem Trägerabschnitt 203 verbundenen Befestigungsring 211 festgelegt. Zwischen dem Befestigungsring 211 und den Ringmagneten 197 kann außerdem eine Tellerfeder 213 vorgesehen sein.

Innerhalb des Magnetlagers ist ein Not- bzw. Fanglager 215 vorgesehen, welches im normalen Betrieb der Vakuumpumpe 111 ohne Berührung leer läuft und erst bei einer übermäßigen radialen Auslenkung des Rotors 149 relativ zu dem Stator in Eingriff gelangt, um einen radialen Anschlag für den Rotor 149 zu bilden, da eine Kollision der rotorseitigen Strukturen mit den statorseitigen Strukturen verhindert wird. Das Fanglager 215 ist als ungeschmiertes Wälzlager ausgebildet und bildet mit dem Rotor 149 und/oder dem Stator einen radialen Spalt, welcher bewirkt, dass das Fanglager 215 im normalen Pumpbetrieb außer Eingriff ist. Die radiale Auslenkung, bei der das Fanglager 215 in Eingriff gelangt, ist groß genug bemessen, sodass das Fanglager 215 im normalen Betrieb der Vakuumpumpe nicht in Eingriff gelangt, und gleichzeitig klein genug, sodass eine Kollision der rotorseitigen Strukturen mit den statorseitigen Strukturen unter allen Umständen verhindert wird.

Die Vakuumpumpe 111 umfasst den Elektromotor 125 zum drehenden Antreiben des Rotors 149. Der Anker des Elektromotors 125 ist durch den Rotor 149 gebildet, dessen Rotorwelle 153 sich durch den Motorstator 217 hindurch erstreckt. Auf den sich durch den Motorstator 217 hindurch erstreckenden Abschnitt der Rotorwelle 153 kann radial außenseitig oder eingebettet eine Permanentmagnetanordnung angeordnet sein. Zwischen dem Motorstator 217 und dem sich durch den Motorstator 217 hindurch erstreckenden Abschnitt des Rotors 149 ist ein Zwischenraum 219 angeordnet, welcher einen radialen Motorspalt umfasst, über den sich der Motorstator 217 und die Permanentmagnetanordnung zur Übertragung des Antriebsmoments magnetisch beeinflussen können.

Der Motorstator 217 ist in dem Gehäuse innerhalb des für den Elektromotor 125 vorgesehenen Motorraums 137 festgelegt. Über den Sperrgasanschluss 135 kann ein Sperrgas, das auch als Spülgas bezeichnet wird, und bei dem es sich beispielsweise um Luft oder um Stickstoff handeln kann, in den Motorraum 137 gelangen. Über das Sperrgas kann der Elektromotor 125 vor Prozessgas, z.B. vor korrosiv wirkenden Anteilen des Prozessgases, geschützt werden. Der Motorraum 137 kann auch über den Pumpenauslass 117 evakuiert werden, d.h. im Motorraum 137 herrscht zumindest annäherungsweise der von der am Pumpenauslass 117 angeschlossenen Vorvakuumpumpe bewirkte Vakuumdruck.

Zwischen der Rotornabe 161 und einer den Motorraum 137 begrenzenden Wandung 221 kann außerdem eine sog. und an sich bekannte Labyrinthdichtung 223 vorgesehen sein, insbesondere um eine bessere Abdichtung des Motorraums 217 gegenüber den radial außerhalb liegenden Holweck-Pumpstufen zu erreichen.

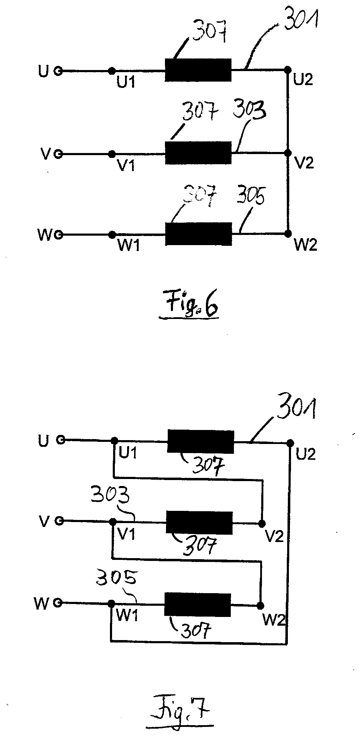

Bei dem Elektromotor 125 kann der Motorstator 217 drei von einem jeweiligen elektrischen Leiter gebildete Wicklungsstränge 301, 303 und 305 aufweisen, welche auch als Außen- oder Phasenleiter bezeichnet werden. In den Fig. 6 und 7 sind mögliche Schaltkonfigurationen für die drei Wicklungsstränge dargestellt, die nachfolgend näher beschrieben werden.

Der erste Wicklungsstrang 301 weist ein erstes Ende U1 und ein zweites Ende U2 auf. Der zweite Wicklungsstrang 303 weist ein erstes Ende V1 und ein zweites Ende V2 auf. Der dritte Wicklungsstrang 305 weist ein erstes Ende W1 und ein zweites Ende W2 auf. Jeder der drei Wicklungsstränge 301, 303 und 305 bildet im Bereich des Motorstators 217 in an sich bekannter Weise eine oder mehrere Spulen 307, welche zumindest im Wesentlichen die magnetischen Pole des Motorstators 217 bilden und das statorseitige magnetische Feld generieren, das mit einem rotorseitigen Magnetfeld zum rotierenden Antreiben des Rotors 149 zusammenwirkt.

Wie die Fig. 6 zeigt, sind die zweiten Enden U2, V2 und W2 der Wicklungsstränge 301, 303 und 305 kurzgeschlossen. Der Verbindungspunkt der Enden U2, V2 und W2 wird auch als Sternpunkt bezeichnet, von dem aus ein sogenannter Neutralleiter, der in Fig. 6 nicht gezeigt ist, weggeführt sein kann. Die ersten Enden U1, V1 und W1 der Wicklungsstränge 301, 303 und 305 bilden die Eingänge in die Wicklungsstränge 301, 303 und 305 und können - wie es aus dem Stand der Technik bekannt ist - aus der Vakuumpumpe herausgeführt sein, um die Wicklungsstränge 301, 303 und 305 zum Beispiel in an sich bekannter Weise mit Drehstrom eines Niederspannungsnetzes zu bestromen.

Die Fig. 7 zeigt ein Schaltbild des Motorstators 217 des Elektromotors 125 bei einer Verschaltung der Wicklungsstränge 301, 303 und 305 in einer Dreieckkonfiguration. Dabei sind die Wicklungsstränge 301, 303 und 305 in Reihe geschaltet. Das zweite Ende U2 des ersten Wicklungsstrangs 301 ist mit dem ersten Ende W1 des dritten Wicklungsstrangs 305 kurzgeschlossen. Das zweite Ende W2 des dritten Wicklungsstrangs 305 ist mit dem ersten Ende V1 des zweiten Wicklungsstrangs 303 kurzgeschlossen. Das zweite Ende V2 des zweiten Wicklungsstrangs 303 ist mit dem ersten Ende des ersten Wicklungsstrangs 301 kurzgeschlossen. Fig. 7 zeigt außerdem, dass an den ersten Enden U1, V1 und W1 der Wicklungsstränge 301, 303, 305 die Phasen U, V und W eines Niederspannungsdrehstromnetzes eingespeist werden können. Bei der Schaltung der Fig. 7 wird kein Neutralleiter benötigt, da kein physischer Sternpunkt vorhanden ist.

Im Unterschied zu den mit Bezug auf die Fig. 6 und 7 gezeigten Schaltbildern sind erfindungsgemäß die Enden U1, U2, V1, V2, W1 und W2 der Wicklungsstränge 301, 303 und 305 nicht intern in Art einer Dreieckschaltung oder in Art einer Sternschaltung verschaltet, sondern alle sechs Enden der Wicklungsstränge 301, 303 und 305 sind mit elektrischen Kontakten eines an der Vakuumpumpe 111 vorgesehenen elektrischen Anschlusses verbunden. Die elektrischen Kontakte des elektrischen Anschlusses sind von außen zugänglich. Dadurch können die Wicklungsstränge 301, 303 und 305 von außerhalb der Vakuumpumpe, zum Beispiel in Art der Dreieckschaltung oder der Sternschaltung, miteinander verbunden werden, um die Konfiguration gemäß Fig. 6 oder Fig. 7 zu realisieren.

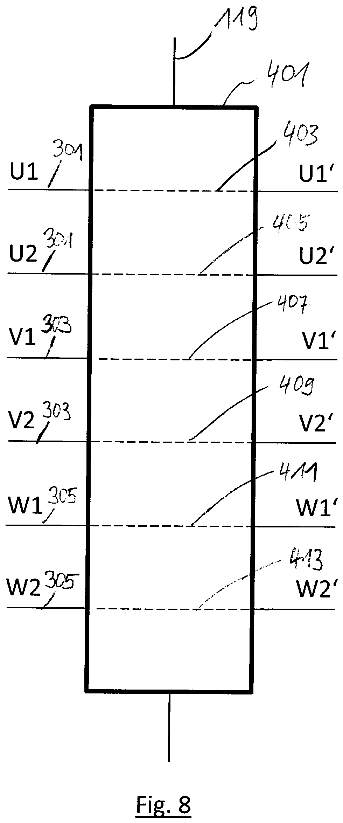

Der elektrische Anschluss der Vakuumpumpe kann in Art einer in Fig. 8 gezeigten Vakuumstromdurchführung 401 ausgebildet sein, die am Gehäuse 119 der Vakuumpumpe 111 angeordnet ist. Die Vakuumstromdurchführung 401 weist sechs elektrische Kontakte 403, 405, 407, 409, 411 und 413 auf, die vom Inneren der Vakuumpumpe durch die Vakuumstromdurchführung 401 hindurch nach außen verlaufen.

Dabei kann, wie Fig. 8 zeigt, das erste Ende U1 des ersten Wicklungsstrangs 301 mit dem elektrischen Kontakt 403 verbunden sein, der somit eine Verlängerung des ersten Wicklungsstrangs 301 darstellt. In Fig. 8 ist das von dem elektrischen Kontakt 403 gebildete, außerhalb der Vakuumpumpe liegende erste Ende des ersten Wicklungsstrangs 301 als U1' bezeichnet.

Das zweite Ende U2 des ersten Wicklungsstrangs 301 ist mit dem elektrischen Kontakt 405 verbunden, wodurch der erste Wicklungsstrang 301 ein außen liegendes zweites Ende U2' aufweist. Das erste Ende V1 des zweiten Wicklungsstrangs 303 ist mit dem elektrischen Kontakt 407 verbunden, so dass der zweite Wicklungsstrang 303 ein außen liegendes erstes Ende V1' aufweist. Das zweite Ende V2 des zweiten Wicklungsstrangs 303 ist mit dem elektrischen Kontakt 409 verbunden, so dass der zweite Wicklungsstrang 303 auch ein außen liegendes zweites Ende V2' aufweist. Das erste Ende W1 des dritten Wicklungsstrangs 305 ist mit dem elektrischen Kontakt 411 verbunden und das zweite Ende des dritten Wicklungsstrangs 305 ist mit dem elektrischen Kontakt 413 verbunden. Der dritte Wicklungsstrang 305 weist somit ein außen liegendes erstes Ende W1' und ein außen liegendes zweites Ende W2' auf.

Durch Kurzschließen der Enden U2', V2' und W2' bzw. der elektrischen Kontakte 405, 409 und 413 an der Außenseite der Vakuumpumpe 111 kann die Konfiguration gemäß Fig. 6 erreicht werden. Die Konfiguration gemäß Fig. 7 wird erreicht, indem das Ende U2' mit dem Ende W1' kurzgeschlossen wird, das Ende W2' mit dem Ende V1' kurzgeschlossen wird und die Enden U1' und V2' miteinander kurzgeschlossen werden. Somit kann der im Inneren der Vakuumpumpe 111 liegende Elektromotor 125 durch entsprechende Verschaltung der von außerhalb der Vakuumpumpe 111 zugänglichen und in das Innere der Vakuumpumpe 111 führenden elektrischen Kontakte 403 bis 413 in Art einer Dreieckschaltung oder in Art einer Sternschaltung verschaltet werden. Wie vorstehend bereits beschrieben wurde, eignet sich der Elektromotor 125 je nach Verschaltung zur Verwendung in einem 200 Volt-Netz oder in einem 400 Volt-Netz.

Es kann ein in Fig. 8 nicht dargestellter Stecker von außerhalb der Vakuumpumpe an dem von der Vakuumstromdurchführung 401 gebildeten elektrischen Anschluss angebracht werden, durch den die elektrischen Kontakte 405, 409 und 413 derart kurzgeschlossen werden, dass die drei Wicklungsstränge 301, 303 und 305 in Art einer Sternschaltung miteinander verbunden sind. Es kann ein anderer Stecker vorgesehen sein, mit dem - wie vorstehend ebenfalls beschrieben wurde - die elektrischen Kontakte 403, 405, 407, 409, 411 und 413 derart kurzgeschlossen werden, dass die drei Wicklungsstränge 301, 303 und 305 in Art einer Dreieckschaltung miteinander verbunden sind. An den jeweiligen ersten Enden U1', V1' und W1' kann außerdem eine Einspeisung der Phasen eines Drehstromnetzes erfolgen.

Anstelle der Stecker kann eine nicht dargestellte Umschalteinrichtung an der Vakuumstromführung 401 angebracht sein, mittels der die elektrischen Kontakte 403 bis 413 wechselweise, also in umschaltbarer Weise, in Art einer Sternschaltung oder in Art einer Dreieckschaltung miteinander verbunden werden können. Es kann beispielsweise eine Umschaltung während des Motorbetriebs erfolgen, z.B. in Abhängigkeit von der Drehzahl.

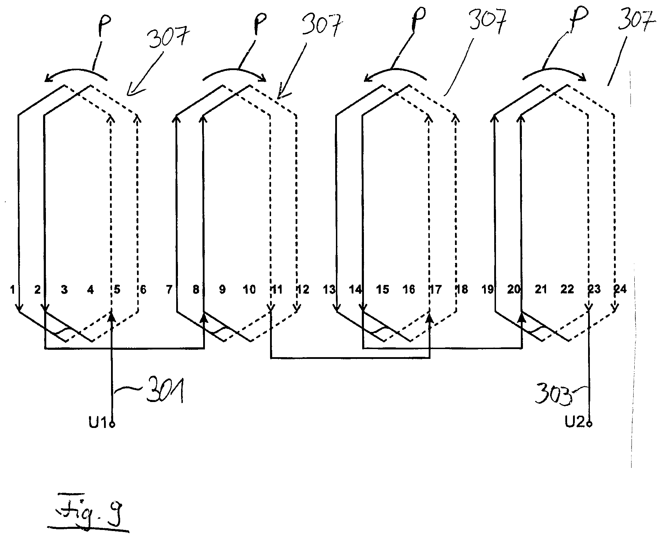

Wie in Fig. 9 für die Wicklungsstränge 301 und 303 gezeigt ist, können die von den Wicklungssträngen 301 und 303 gebildeten Spulen 307 sogenannte gesehnte Wicklungen aufweisen. Wie in Fig. 9 gesehen werden kann, bildet eine jeweilige Spule 307 einen statorseitigen magnetischen Pol, der sich über 6 Nuten erstreckt (vgl. z.B. die Ordnungszahlen 1 bis 6 bei der ganz linken Spule 307). Demgegenüber beträgt die Spulenweite 4 Nuten, da z.B. bei der linken Spule 307 eine Windung durch die Nut mit der Ordnungszahl 1 und durch die Nut mit der Ordnungszahl 4 verläuft. Die Wicklungsstränge 301, 303 und 305 weisen somit eine Sehnung S = Spulenweite / Polteilung = 4/6 auf.

Wie ferner aus Fig. 9 ersichtlich ist, sind die Wicklungsstränge 301, 303 in einer sogenannten Zweischichtwicklung angeordnet. Entsprechendes gilt für den in Fig. 9 nicht dargestellten weiteren Wicklungsstrang 305.

Die in Fig. 9 gezeigten Pfeile P geben den Umlaufsinn der Wicklungen der Spulen 307 des jeweiligen Pols an, wodurch sich bei Bestromung der Spulen 307 in an sich bekannter Weise abwechselnd Nord- und Südpole einstellen.

### Bezuaszeichenliste

- 111: Turbomolekularpumpe
- 113: Einlassflansch
- 115: Pumpeneinlass
- 117: Pumpenauslass
- 119: Gehäuse
- 121: Unterteil
- 123: Elektronikgehäuse
- 125: Elektromotor
- 127: Zubehöranschluss
- 129: Datenschnittstelle
- 131: Stromversorgungsanschluss
- 133: Fluteinlass
- 135: Sperrgasanschluss
- 137: Motorraum
- 139: Kühlmittelanschluss
- 141: Unterseite
- 143: Schraube
- 145: Lagerdeckel
- 147: Befestigungsbohrung
- 148: Kühlmittelleitung
- 149: Rotor
- 151: Rotationsachse
- 153: Rotorwelle
- 155: Rotorscheibe
- 157: Statorscheibe
- 159: Abstandsring
- 161: Rotornabe
- 163: Holweck-Rotorhülse
- 165: Holweck-Rotorhülse
- 167: Holweck-Statorhülse
- 169: Holweck-Statorhülse
- 171: Holweck-Spalt
- 173: Holweck-Spalt
- 175: Holweck-Spalt
- 179: Verbindungskanal
- 181: Wälzlager
- 183: Permanentmagnetlager
- 185: Spritzmutter
- 187: Scheibe
- 189: Einsatz
- 191: rotorseitige Lagerhälfte
- 193: statorseitige Lagerhälfte
- 195: Ringmagnet
- 197: Ringmagnet
- 199: Lagerspalt
- 201: Trägerabschnitt
- 203: Trägerabschnitt
- 205: radiale Strebe
- 207: Deckelelement
- 209: Stützring
- 211: Befestigungsring
- 213: Tellerfeder
- 215: Not-bzw. Fanglager
- 217: Motorstator
- 219: Zwischenraum
- 221: Wandung
- 223: Labyrinthdichtung
- 301: Wicklungsstrang
- 303: Wicklungsstrang
- 305: Wicklungsstrang
- 307: Spule
- 401: Vakuumstromdurchführung
- U1: Wicklungsstrangende
- U2: Wicklungsstrangende
- V1: Wicklungsstrangende
- V2: Wicklungsstrangende
- W1: Wicklungsstrangende
- W2: Wicklungsstrangende
- U1': Wicklungsstrangende
- U2': Wicklungsstrangende
- V1': Wicklungsstrangende
- V2': Wicklungsstrangende
- W1': Wicklungsstrangende
- W2': Wicklungsstrangende
- P: Pfeil

## Patentansprüche

1. Vakuumpumpe, insbesondere Turbomolekularpumpe, mit einem Synchron-Elektromotor (125) zum Antreiben eines sich bewegenden Teils der Vakuumpumpe, insbesondere zum Antreiben eines Pump-Rotors (149) der Vakuumpumpe, wobei der Elektromotor (125) einen Rotor und einen Stator (217) aufweist, wobei der Stator (217) drei von einem jeweiligen elektrischen Leiter gebildete Wicklungsstränge (301, 303, 305) zur Erzeugung eines statorseitigen magnetischen Feldes aufweist, das mit einem rotorseitigen magnetischen Feld des Rotors zum rotierenden Antreiben des Rotors zusammenwirkt,
**dadurch gekennzeichnet, dass**
ein elektrischer Anschluss (401) mit wenigstens 6 von außerhalb der Vakuumpumpe (111) zugänglichen und in das Innere der Vakuumpumpe (111) führenden elektrischen Kontakten (403, 405, 407, 409, 411, 413) vorgesehen ist, dass jedes der beiden Enden (U1, U2, V1, V2, W1, W2) jedes Wicklungsstrangs (301, 303, 305) mit einem der elektrischen Kontakte (403, 405, 407, 409, 411, 413) verbunden ist, und dass
die Wicklungsstränge (301, 303, 305) des Stators (217) eine Sehnung derart aufweisen, dass Oberwellen des statorseitigen magnetischen Felds, insbesondere Oberwellen mit durch drei teilbaren Ordnungszahlen, zumindest im Wesentlichen vermieden werden.

2. Vakuumpumpe nach Anspruch 1,
**dadurch gekennzeichnet, dass**
der elektrische Anschluss von einer, insbesondere am Gehäuse der Vakuumpumpe vorgesehenen, Vakuumstromdurchführung (401) gebildet wird, und die wenigstens 6 elektrischen Kontakte (403, 405, 407, 409, 411, 413) vom Inneren der Vakuumpumpe (111) durch die Vakuumstromdurchführung (401) hindurch nach außen geführt sind.

3. Vakuumpumpe nach Anspruch 1 oder 2,
**dadurch gekennzeichnet, dass**
die elektrischen Kontakte (403, 405, 407, 409, 411, 413) derart verschaltet oder verschaltbar sind, dass die drei Wicklungsstränge (301, 303, 305) die Konfiguration einer Sternschaltung oder einer Dreieckschaltung aufweisen.

4. Vakuumpumpe nach zumindest einem der vorhergehenden Ansprüche,
**dadurch gekennzeichnet, dass**
ein erster Stecker an dem elektrischen Anschluss (401) anbringbar oder angebracht ist, durch den elektrische Kontakte (405, 409, 413) des Anschlusses (401) derart miteinander kurzgeschlossen werden, dass die drei Wicklungsstränge (301, 303, 305) in Art einer Sternschaltung miteinander verbunden sind, und/oder
ein zweiter Stecker an dem elektrischen Anschluss (401) anbringbar oder angebracht ist, durch den elektrische Kontakte (403, 405, 407, 409, 411, 413) des Anschlusses (401) derart miteinander kurzgeschlossen werden, dass die drei Wicklungsstränge (301, 303, 305) in Art einer Dreieckschaltung miteinander verbunden sind, und/oder
eine Umschalteinrichtung an dem elektrischen Anschluss (401) anbringbar oder angebracht ist, mittels dem elektrische Kontakte (403, 405, 407, 409, 411, 413) des Anschlusses (401) wechselweise, also umschaltbar, in Art einer Sternschaltung oder in Art einer Dreieckschaltung miteinander verbunden werden können.

5. Vakuumpumpe nach zumindest einem der vorhergehenden Ansprüche,
**dadurch gekennzeichnet, dass**
die Sehnung 2/3 oder 4/6 oder 6/9 oder allgemein 2n/3n beträgt, wobei n eine positive ganze Zahl ist.

6. Vakuumpumpe nach zumindest einem der vorhergehenden Ansprüche,
**dadurch gekennzeichnet, dass**
der Rotor des Elektromotors (125) zur Erzeugung des rotorseitigen Magnetfelds mehrere in Umfangsrichtung des Rotors versetzt angeordnete Permanentmagnete aufweist.

7. Vakuumpumpe nach Anspruch 6,
**dadurch gekennzeichnet, dass**
die Permanentmagnete am Außenumfang des Rotors angeordnet oder in den Rotor eingebettet sind.

## Claims

1. A vacuum pump, in particular a turbomolecular pump, comprising a synchronous electric motor (125) for driving a moving part of the vacuum pump, in particular for driving a pump rotor (149) of the vacuum pump, wherein the electric motor (125) has a rotor and a stator (217); wherein the stator (217) has three winding strands (301, 303, 305) formed by a respective electrical conductor to generate a stator-side magnetic field which cooperates with a rotor-side magnetic field of the rotor for a rotating driving of the rotor,
**characterized in that**
an electrical terminal (401) is provided which comprises at least six electrical contacts (403, 405, 407, 409, 411, 413) which are accessible from outside the vacuum pump (111) and which lead into the interior of the vacuum pump (111); **in that** each of the two ends (U1, U2, V1, V2, W1, W2) of each winding strand (301, 303, 305) is connected to one of the electrical contacts (403, 405, 407, 409, 411, 413); and **in that**
the winding strands (301, 303, 305) of the stator (217) have a pitch such that harmonics of the stator-side magnetic field, in particular harmonics having ordinal numbers divisible by three, are at least substantially avoided.

2. A vacuum pump in accordance with claim 1,
**characterized in that**
the electrical terminal is formed by a vacuum flow leadthrough (401), in particular provided at the housing of the vacuum pump, and the at least six electrical contacts (403, 405, 407, 409, 411, 413) are led outwardly from the interior of the vacuum pump (111) through the vacuum flow leadthrough (401).

3. A vacuum pump in accordance with claim 1 or claim 2,
**characterized in that**
the electrical contacts (403, 405, 407, 409, 411, 413) are connected or can be connected such that the three winding strands (301, 303, 305) have the configuration of a star connection or of a delta connection.

4. A vacuum pump in accordance with at least one of the preceding claims,
**characterized in that**
a first plug is attachable or attached to the electrical terminal (401) and electrical contacts (405, 409, 413) of the terminal (401) are short-circuited to one another by said first plug such that the three winding strands (301, 303, 305) are connected to one another in the manner of a star connection;
and/or
**in that** a second plug is attachable or attached to the electrical terminal (401) and electrical contacts (403, 405, 407, 409, 411, 413) of the terminal (401) are short-circuited to one another by said second plug such that the three winding strands (301, 303, 305) are connected to one another in the manner of a delta connection; and/or
**in that** a switchover device is attachable or attached to the electrical terminal (401) and electrical contacts (403, 405, 407, 409, 411, 413) of the terminal (401) can be alternately, that is switchably, connected to one another by means of said switchover device in the manner of a star connection or in the manner of a delta connection.

5. A vacuum pump in accordance with at least one of the preceding claims,
**characterized in that**
the pitch amounts to 2/3 or 4/6 or 6/9 or generally amounts to 2n/3n, where n is a positive whole number.

6. A vacuum pump in accordance with at least one of the preceding claims,
**characterized in that**
the rotor of the electric motor (125) has a plurality of permanent magnets arranged offset in the peripheral direction of the rotor to generate the rotor-side magnetic field.

7. A vacuum pump in accordance with claim 6,
**characterized in that**
the permanent magnets are arranged at the outer periphery of the rotor or are embedded into the rotor.

## Revendications

1. Pompe à vide, en particulier pompe turbomoléculaire, comportant un moteur électrique synchrone (125) pour entraîner une partie en déplacement de la pompe à vide, en particulier pour entraîner un rotor de pompage (149) de la pompe à vide, le moteur électrique (125) comprenant un rotor et un stator (217), le stator (217) présentant trois brins d'enroulement (301, 303, 305) formés par un conducteur électrique respectif pour générer un champ magnétique côté stator qui interagit avec un champ magnétique côté rotor du rotor pour l'entraînement en rotation du rotor,
**caractérisée en ce que**
une borne électrique (401) est munie d'au moins 6 contacts électriques (403, 405, 407, 409, 411, 413) accessibles de l'extérieur de la pompe à vide (111) et menant vers l'intérieur de la pompe à vide (111), **en ce que** chacune des deux extrémités (U1, U2, V1, V2, W1, W2) de chaque brin d'enroulement (301, 303, 305) est connectée à l'un des contacts électriques (403, 405, 407, 409, 411, 413), et **en ce que**
les brins d'enroulement (301, 303, 305) du stator (217) ont un pas d'enroulement partiel tel que des harmoniques du champ magnétique côté stator, en particulier des harmoniques ayant des rangs divisibles par trois, sont au moins sensiblement évitées.

2. Pompe à vide selon la revendication 1,
**caractérisée en ce que**
la borne électrique est formée par une traversée de courant (401) sous vide prévue en particulier sur le boîtier de la pompe à vide, et lesdits au moins 6 contacts électriques (403, 405, 407, 409, 411, 413) sont menés depuis l'intérieur de la pompe à vide (111) à travers la traversée de courant (401) sous vide vers l'extérieur.

3. Pompe à vide selon la revendication 1 ou 2,
**caractérisée en ce que**
les contacts électriques (403, 405, 407, 409, 411, 413) sont branchés ou susceptibles d'être branchés de telle sorte que les trois brins d'enroulement (301, 303, 305) présentent la configuration d'une connexion en étoile ou d'une connexion en triangle.

4. Pompe à vide selon l'une au moins des revendications précédentes,
**caractérisée en ce que**
une première fiche est montée ou susceptible d'être montée sur la borne électrique (401), par laquelle les contacts électriques (405, 409, 413) de la borne (401) sont court-circuités entre eux de telle sorte que les trois brins d'enroulement (301, 303, 305) sont connectés entre eux à la manière d'une connexion en étoile, et/ou
une seconde fiche est montée ou susceptible d'être montée sur la borne électrique (401), par laquelle les contacts électriques (403, 405, 407, 409, 411, 413) de la borne (401) sont court-circuités entre eux de telle sorte que les trois brins d'enroulement (301, 303, 305) sont connectés entre eux à la manière d'une connexion en triangle, et/ou
un moyen de commutation est monté ou susceptible d'être monté sur la borne électrique (401) par lequel les contacts électriques (403, 405, 407, 409, 411, 413) de la borne (401) peuvent être connectés entre eux en alternance, donc de façon commutable, à la manière d'une connexion en étoile ou à la manière d'une connexion en triangle.

5. Pompe à vide selon l'une au moins des revendications précédentes,
**caractérisée en ce que**
le pas d'enroulement partiel est de 2/3 ou de 4/6 ou de 6/9 ou généralement de 2n/3n, n étant un nombre entier positif.

6. Pompe à vide selon l'une au moins des revendications précédentes,
**caractérisée en ce que**
le rotor du moteur électrique (125) pour la génération du champ magnétique côté rotor comprend plusieurs aimants permanents disposés en décalage en direction périphérique du rotor.

7. Pompe à vide selon la revendication 6,
**caractérisée en ce que**
les aimants permanents sont disposés sur le pourtour extérieur du rotor ou sont noyés dans le rotor.
